# EUROPEAN PATENT APPLICATION

(11) **EP 1 375 418 A1**
(43) Date of publication of application: **02.01.2004**
(21) Application number: 02014421.8
(22) Date of filing: 28.06.2002
(51) Int. Cl.: C01B 3/02, C01C 1/04, B01F 5/04, C01B 3/52

(54) **Method and apparatus for ammonia synthesis gas production**

(71) Applicant: AMMONIA CASALE S.A., CH-6900 Lugano-Besso (CH)
(72) Inventor: Debernardi, Sergio, 6900 Lugano (CH)
(74) Representative: Zardi, Marco

(57) **Abstract**

Method for ammonia production through a catalytic reaction of pressurised synthesis gas in an appropriate compressor with many stages (1, 2), each of which is equipped with an inlet and outlet (1a, 2a, 1b, 2b) for said synthesis gas said method including a purification step through liquid ammonia of said synthesis gas from water and carbon dioxide contained in it.

## Description

### Field of application

The present invention refers, in its most general aspect, to a method and relative apparatus for ammonia production through a catalytic reaction of synthesis gas, comprising hydrogen and nitrogen, previously pressurised in a suitable compressor with two or more stages.

In particular this invention concerns a method of the aforementioned type in which a purification step of the synthesis gas is provided for through separation of water and carbon dioxide contained therein, carried out in correspondence with an intermediate stage of said compressor.

More specifically, the present invention refers to a method of the considered type, in which the synthesis gas is collected when exiting from a predetermined stage of said compressor, is purified and cooled at a predetermined temperature, through washing with substantially anhydrous liquid ammonia, and then is fed again into a stage of said compressor, after the one from which it was collected.

### Prior Art

It is known how in recent times, with regard to the production of ammonia, substantial resources have been devoted to the innovation of plants and processes with the main intention of reducing the recognisedly high operating and investment costs, the main one of which consists of its energy consumption.

It is also known that, still for the aforementioned purpose, special attention has been devoted to the feeding of the synthesis gas to the reactor, making allowance for the fact that the performances of the reactor are so strongly influenced by the ammonia content in the gas fed to the ammonia converter and by the purity of such gas, namely by the amount of oxide compounds like H₂O and CO₂ present therein, insomuch that said "impurities" must be practically eliminated, from the gas (feeding gas plus recycled gas).

For such a purification, the methods most widely adopted by the prior art are based upon the use of recycled liquid ammonia for a washing step and concurrent rapid cooling of the synthesis gas, which is then sent to the reactor. But besides the substantial operating costs the chilling unit and the recondensation of the ammonia vaporised there, the aforementioned methods involve increased costs for the necessary subsequent step of heating the purified gas to the predetermined temperature of entry into the reactor.

To reduce if not actually avoid such a dissipation of energy, in the most common purification systems, units based upon the use of molecular screens have been used; however, compared to a recognisedly high efficiency, said systems still involve very high operating and investment costs.

Recently it has been suggested to subject the synthesis gas to a washing with liquid ammonia carried out between the first and second stage of the two stage compressor provided for the necessary compression of the gas itself (from 80 to 150 bar loop pressure), otherwise between the second and the third stage of a three stage compressor (from 150 to 250 bar loop pressure). In the jargon of the field, these compression stages are indicated as compression stages of the "make-up" synthesis gas, with which is associated the final compression stage, known as the recycling stage since it is used for the compression and recycling into the reactor of the unreacted gases coming from the synthesis section as well as of the compressed make-up gas.

In particular, in patent PCT WO 01/66465 is described a purification method of the aforementioned type carried out through a plate column fed in countercurrent with liquid ammonia and with a continuous flow of synthesis gas coming from the first stage of a chosen compressor, and where the purified gas is then directly sent to the suction of the second stage of the same compressor.

Although advantageous for some aspects, the purification method according to the prior art has different recognised technical drawbacks. Firstly, the synthesis gas crossing the washing column for its purification undergoes a predetermined pressure drop. This pressure drop must be necessarily recovered downstream of such washing with the consequent energy consumptions of the compressor. Moreover, this type of purification causes an appreciable evaporation of the liquid washing ammonia that is thus absorbed by the flow of synthesis gas and thus inevitably recycled in the reactor at the expense of the conversion yield thereof. A reduction in the conversion yield of the reactor has, moreover, as a consequence, an increase in the amount of unreacted substances that have to be separated from the flow of ammonia produced and to be recycled to the reactor, with consequent overloads at the sections intended for such operations and high energy consumptions.

### Summary of the invention

The problem atthe base of the present invention is that of providing a method for synthesis ammonia production of the type considered above, in which the purification system of the synthesis gas has functional characteristics so as to overcome the drawbacks quoted above with reference to the prior art and in particular so as to allow a substantial energy saving compared to the methods used up to now.

This problem is solved according to the invention by a method for ammonia production through a catalytic reaction of pressurised synthesis gas in an appropriate compressor with many stages, each of which is equipped with an inlet and outlet for said synthesis gas, which method includes a purification step of said synthesis gas from water and carbon dioxide contained in it through liquid ammonia, characterised in that said purification comprises the operating steps of:
- arranging a gas-liquid mixer in fluid communication, on one side with the outlet of a first stage of said compressor or with the outlet of an intermediate stage thereof and, on the other side, with the inlet of a stage immediately following said first stage or said intermediate stage, said mixer having a portion of reduced cross section, extending for a prearranged axial length,
- axially feeding into said mixer a flow of synthesis gas outbound from said first stage or from said intermediate stage at the same time as a flow of liquid ammonia, said flows being coaxial and in co-current,
- separating substantially anhydrous synthesis gas from the mixture of said flows outbound from said mixer and sending said gas into said stage following said first stage or said intermediate stage.

Advantageously, said flow of synthesis gas is cooled to a temperature of between +8°/-20°C, before being fed into said mixer.

The characteristics and advantages of the method of the present invention shall become clearer from the following description of an example embodiment thereof, made with reference to the attached drawings given for indicating and not limiting purposes.

### Brief description of the drawings

- Figure 1 represents schematically a plant for ammonia production comprising an apparatus for the compression and purification of the synthesis gas provided for in the method for ammonia production of the present invention;
- Figure 2 represents an enlarged cross-section view of a detail of the plant for the production of ammonia of figure 1.

### Detailed description

With reference to the figures, a plant for the production of ammonia is globally schematically indicated with P, comprising an apparatus for carrying out the method of the present invention, which comprises a compressor with many stages, of which just the longitudinal axis A is shown, and where with 1 and 2 two subsequent stages thereof are schematically indicated, aligned and adjacent on said axis A. Preferably, but not for limiting purposes, such a compressor is a two stage compressor, of which one is for what is known as make-up gas compression and a final stage for what is known as recycling compression.

The stage 1 has an inlet 1a (or suction end) in fluid communication with a source 3 of synthesis gas through a line 4 and has an outlet 1b (or discharge end) in fluid communication with a first gas-liquid separator 5, through a line 6 and a cooling group 7.

The stage 2 has a first inlet 2a in fluid communication with the head 8a of a second gas-liquid separator 8, through a respective line 9, and a second inlet 2b in fluid communication with the head 10a of a third gas-liquid separator 10, through a line 11 and a cooling group 12. The outlet 2c of said stage 2 is in fluid communication with the head 13a of an ammonia synthesis reactor 13, through a line 14 and a respective cooling group 15.

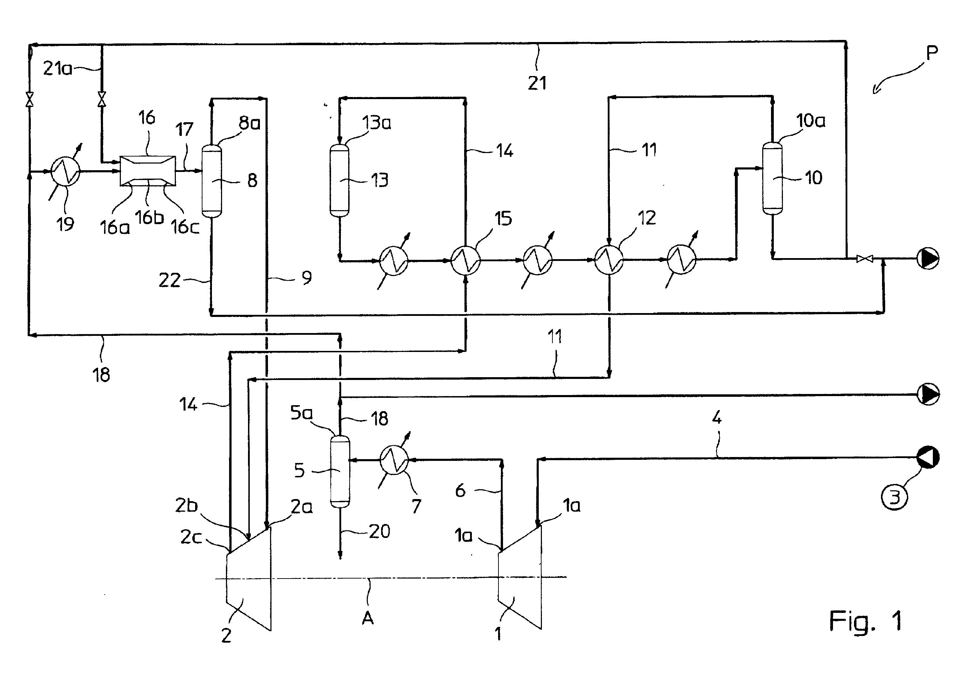

In accordance with a characteristic of the present invention, the apparatus of fig. 1 comprises a mixer 16, in fluid communication, on one side, with said separator 8, through a line 17 and, on the other side, with the head 5a of the separator 5, through a line 18 and respective cooling group 19.

It should be noted that, in the exemplified case of a two-stage synthesis gas compressor, said mixer 16 is positioned between the first and second stage. Moreover, it is preferably arranged in a substantially horizontal position with respect to the ground of the plant P.

The synthesis gas coming out from the first compression stage 1 is fed to the cooling group 7 and then to the separator 5, where most of the water is separated from the gas and is discharged through the duct 20.

The flow of said synthesis gas, thus dehydrated, is sent to the cooling group 19. Advantageously, upstream of the inlet into such a group 19, to the synthesis gas is added a flow of (pressurised) liquid ammonia, with a low flow rate, taken downstream of the separator 10 and recycled through the line 21. This happens for the purpose of avoiding the freezing in the subsequent low temperature cooling group 19.

The amount of liquid ammonia is such as to ensure, after cooling, a concentration of ammonia in liquid phase of between 25% and 50%, the rest being water.

Coming out from the cooling group 19, the synthesis gas is cooled to +8°/-20°C and in such a condition is fed axially into the mixer 16.

At the same time as the synthesis gas, into said mixer is fed (injected), through a line 21a, a flow of (pressurised) liquid ammonia, the flow rate of which is calculated to carry out an effective "washing" of said gas, so as to free it from the water contained in it. This flow 21a of liquid ammonia comes from the recycling line 21, quoted previously.

Advantageously, said flow 21a of liquid ammonia is fed into the mixer 16 coaxially and in co-current with the synthesis gas. The temperature of the synthesis gas is thus preferably lowered to -20°/-27°C.

In accordance with a characteristic of the present invention, a portion 16a of predetermined axial length of the aforementioned mixer 16, has a reduced cross-section. In the portion 16a, the flows of liquid ammonia and of reactant gases are advantageously accelerated and mixed together (mixing zone). Preferably, the portion with a reduced cross-section 16a is followed by a second portion 16b with a constant cross-section, of a predetermined axial length, for spreading such flows. The portion 16b in turn goes into a third portion with a predetermined axial length, 16c, with an increasing cross-section, so as to slow down the speed of the fluids once mixed.

Depending upon the operating conditions, particularly satisfactory results in terms of purification of the reactant gases have been obtained with an axial length of the first mixing portion 16a, for example, of between 0.5 and 1 m. In these cases, the axial length of the second portion 16b with a constant section was between 0.6 and 1.2 m.

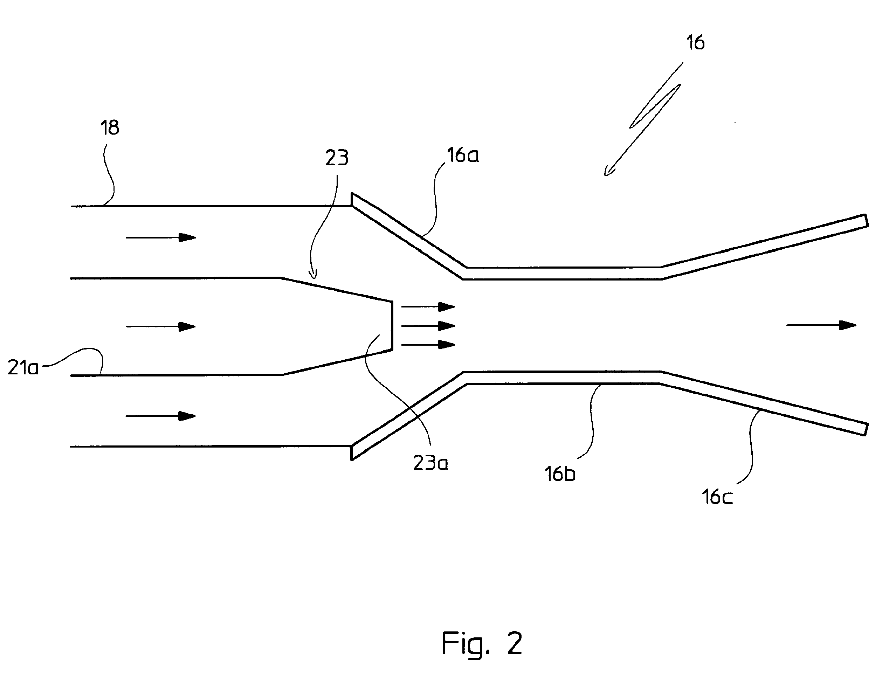

Moreover, according to a particularly preferred embodiment of the present invention represented in figure 2, the feeding into the mixer 16 of the flow of liquid ammonia is carried out through a suitable distributor nozzle 23 arranged inside the portion 16a of the mixer and connected to the line 21a. The line 21a is in turn arranged inside the line 18 for feeding the flow of reactant gases, connected with the free end of the portion 16a of the mixer.

The end part 23a of the nozzle 23 is equipped with appropriate openings or slits (not represented) which are suitably sized so as to allow the flow of liquid ammonia to come out in the form of a plurality of high-speed jets.

In other words, thanks to the jet 23 it is possible to advantageously exploit the pressure of the flow of liquid ammonia coming from the recycling line 21 to obtain high-speed jets which promote the washing of the flow of reactant gases and at the same time create a compression of such flow of reactant gases inside the mixer 16.

Advantageously, thanks to the aforementioned characteristics of the present invention, it is possible to obtain not just a reduction in the pressure drop of the flow of reactant gases during the washing (purification) step thereof with liquid ammonia, but even an increase in the pressure of such a flow, with the consequent substantial energy savings for the subsequent compression of the synthesis gas with respect to the prior art.

In the subsequent separator 8, the liquid ammonia and the water are separated from the synthesis gas and are discharged through the duct 22, whereas said dehydrated synthesis gases, coming out from the head 8a of the separator 8, are fed into (2a) the second stage 2 of the compressor, at a temperature of -20 °/-27°C.

Thanks to this low temperature of the gas entring the compressor, the power required from it is substantially reduced, whereas the its efficiency increases.

Moreover, the technical measure of using low temperature cooling (19) before the mixer 16 gives the advantage of reducing the amount of evaporated ammonia in the synthesis gas, and consequently further reducing the compression energy and at the same time improving the conversion yield of the synthesis reactor with respect to the prior art, with all of the advantages that it brings.

The synthesis gas, compressed to the predetermined value in the second stage of the compressor, is fed to the synthesis reactor 13, after being heatedin 15. From the reactor 13, the gaseous mixture comprising ammonia and unreacted gases is progressively cooled through a plurality of cooling groups (15, 12) and is fed to the separator 10. From this separator, the liquid ammonia thus obtained is sent for storage, whereas the gas, coming out from the head 10a thereof, is recycled into the second stage 2 of the compressor.

The finding thus conceived is susceptible to variants and modifications all of which are covered by the extent of protection defined by the following claims.

## Claims

1. Method for ammonia production through a catalytic reaction of pressurised synthesis gas in an appropriate compressor with many stages (1, 2), each of which is equipped with an inlet and outlet (1a, 2a, 1b 2b, 2c) for said synthesis gas, which method includes a purification step through liquid ammonia of said synthesis gas from water and carbon dioxide contained in it, **characterised in that** said purification comprises the operating steps of:
- arranging a gas-liquid mixer (16) in fluid communication, on one side with the outlet (1b of a first stage (1) of said compressor or with the outlet of an intermediate stage thereof and, on the other side, with the inlet (2b) of a stage (2) immediately following said first stage (1) or said intermediate stage, said mixter (16) having a portion of reduced cross section, extending for a prearranged axial length,
- axially feeding into said mixer (16) a flow of synthesis gas outbound from said first stage (1) or from said intermediate stage at the same time as a flow of liquid ammonia, said flows being coaxial and in co-current,
- separating substantially anhydrous synthesis gas from the mixture of said flows outbound from said mixer (16) and sending said gas into said stage (2) following said first stage (1) or said intermediate stage.

2. Method according to claim 1, **characterised in that** said flow of synthesis gas is cooled to a temperature of between +8°/-20°C, before being fed into said mixer (16).

3. Method according to claim 2, **characterised in that** said cooling is carried out through a flow of liquid ammonia.

4. Method according to claim 3, **characterised in that** said cooling is carried out upstream of the inlet of said coaxial flows of synthesis gas and of liquid ammonia in said mixer (16).

5. Method according to claim 1, **characterised in that** said flow of liquid ammonia is fed into said mixer (16) in the form of a plurality of high speed jets.

6. Method according to claim 5, **characterised in that** said flow of liquid ammonia is fed into said mixer (16) making it pass through a nozzle (23) equipped with appropriate suitably sized openings or slits.

7. Apparatus for carrying out the method of claims 1 to 6, comprising a compressor with many stages (1, 2), each of which is equipped with an inlet and an outlet (1a, 2a, 1b, 2b, 2c), **characterised in that** it comprises a gas-liquid mixer (16) in fluid communication, on one side with the outlet (1b) of a first stage (1) of said compressor or with the outlet of an intermediate stage thereof and, on the other side, with the inlet (2b) of a stage (2) immediately following said first stage (1) or said intermediate stage, said mixer (16) having a portion (16a) of reduced cross-section, extending for a prearranged axial length.

8. Apparatus according to claim 7, **characterised in that** a gas-liquid separator (8) is placed between said mixer (16) and said subsequent stage (2) of said compressor.

9. Apparatus according to claim 8, **characterised in that** at least one cooling group (19) is placed between said mixer (16) and said first stage (1) of said compressor.

10. Apparatus according to claim 7, **characterised in that** it comprises a nozzle (23) equipped with appropriate suitably sized openings or slits in fluid communication on one side with said portion (16a) of reduced cross-section of said mixer (16) and on the opposite side with a line (21a) for feeding a flow of liquid ammonia into said mixer (16).
